# EUROPÄISCHE PATENTANMELDUNG

(11) **EP 2 873 634 A1**
(43) Veröffentlichungstag der Anmeldung: **20.05.2015**
(21) Anmeldenummer: 13005386.1
(22) Anmeldetag: 15.11.2013
(51) Int. Cl.: B65G 51/06

(54) **Rohrpostbüchse**

(71) Anmelder: Swisslog AG, 5033 Buchs (CH)
(72) Erfinder: Kohler, Roman, 5033 Buchs (CH); Schwyn, Christoph, 5033 Buchs (CH)
(74) Vertreter: Heiland, Karsten

(57) **Zusammenfassung**

Die Erfindung betrifft eine Rohrpostbüchse (21) mit einem Deckel (28) an mindestens einem Ende, wobei der Deckel zwischen einer offenen Position und einer geschlossenen Position bewegbar ist, wobei dem Deckel ein Verriegelungsmittel zugeordnet ist, welches ein Bewegen des Deckels aus der geschlossenen Position heraus verhindert. Erfindungsgemäß ist dem Deckel (28) ein Federmittel zugeordnet, welches in Richtung der offenen Position des Deckels wirkt.

## Beschreibung

Die Erfindung betrifft eine Rohrpostbüchse nach dem Oberbegriff des Anspruchs 1. Außerdem betrifft die Erfindung eine Rohrpostbüchse nach dem Oberbegriff des Anspruchs 7.

Rohrpostbüchsen, auch Carrier genannt, sind Transportmittel in Rohrpostanlagen und nehmen das zu fördernde Gut auf. Eine Rohrpostbüchse besteht typischerweise aus einem zylindrischen Körper, auch Rohrstück genannt, und an beiden Enden angeordneten Büchsenköpfen, auch Kappen oder Köpfe genannt. Die Büchsenköpfe sind mit einem Verschluss oder Deckel versehen. Zur Vereinfachung werden nachfolgend die Begriffe Körper, Kappe und Deckel verwendet.

Mit dem Deckel wird eine Öffnung abgedeckt und verschlossen, durch die die Rohrpostbüchse befüllbar ist. Beide Kappen können mit einem Deckel versehen sein. Die Rohrpostbüchse ist dann von beiden Enden her befüllbar. Möglich ist auch die Anordnung einer geschlossenen Kappe ohne Deckel und einer Kappe mit Deckel.

Die Rohrpostbüchse erfährt während des Transports hohe Beschleunigungen. Der Deckel muss deshalb sicher schließen. Um dies zu gewährleisten, weist der Deckel ein Verriegelungsmittel auf, welches ein Bewegen des Deckels aus der geschlossenen Position heraus verhindert. Erst nach dem Lösen des Verriegelungsmittels, nach dem Entriegeln desselben, ist der Deckel aus seiner geschlossenen Position in eine offene Position bewegbar.

Die Rohrpostbüchse soll schnell und einfach handhabbar sein. Fehlbedienungen sollen vermieden werden. Insbesondere soll der Zustand einer gelösten Verriegelung leicht erkennbar sein.

Zur Lösung der genannten Aufgabe weist die erfindungsgemäße Rohrpostbüchse die Merkmale des Anspruchs 1 auf. Dem Deckel ist ein Federmittel zugeordnet, welches in Richtung der offenen Position des Deckels wirkt. Dadurch wird insbesondere die Handhabbarkeit verbessert. Der Deckel muss nicht mit einer Hand offen gehalten werden, während die Rohrpostbüchse befüllt wird. Ein geöffneter Deckel fällt nicht durch Schwerkraft vor die Öffnung.

Nach einem weiteren Gedanken der Erfindung bewegt das Federmittel den Deckel aus seiner geschlossenen Position bis in die offene Position, sobald die Verriegelungsmittel gelöst sind. Dadurch ist schon an der Position des Deckels erkennbar, ob das Verriegelungsmittel gelöst ist. Das Federmittel hält den Deckel in seiner geschlossenen Position ständig unter Druck. Sobald das Verriegelungsmittel gelöst wird, springt der Deckel auf.

Erfindungsgemäß ist vorgesehen, dass der Deckel in seiner geschlossenen Position in einer Ebene senkrecht zu einer Längsachse der Rohrpostbüchse liegt und dass der Deckel in seiner offenen Position insbesondere in einer Ebene parallel zur Längsachse liegt. Der Deckel schwenkt demnach um etwa 90 Grad.

Nach einem weiteren Gedanken der Erfindung ist der Deckel um eine Schwenkachse schwenkbar, welche außerhalb der Längsachse und senkrecht zu dieser verläuft. Bei geöffnetem Deckel ist der Inhalt somit in Längsrichtung der Rohrpostbüchse in dieselbe einführbar und aus dieser entnehmbar. Der geöffnete Deckel steht kaum in radialer Richtung aus der Silhouette der Rohrpostbüchse hervor, fast nur in axialer Richtung.

Nach einem weiteren Gedanken der Erfindung handelt es sich bei dem Federmittel um wenigstens eine Schraubenfeder, welche insbesondere achsparallel oder sogar koaxial zu einer Schwenkachse des Deckels angeordnet ist. Im Extremfall weist die Schraubenfeder nur eine halbe Windung auf. Vorzugsweise weist die Schraubenfeder bei geschlossenem Deckel wenigstens eineinhalb Windungen auf. Die Schraubenfeder wird vorzugsweise um ihre Achse auf Biegung beansprucht.

Erfindungsgemäß kann es sich bei dem Federmittel um wenigstens eine Schraubenfeder handeln, welche an jedem Ende einen tangential gerichteten freien Schenkel aufweist, wobei der eine der beiden Schenkel gegen den Deckel und der andere Schenkel gegen die Rohrpostbüchse im Übrigen bzw. gegen die Kappe drückt.

Eine weitere Ausführung einer erfindungsgemäßen Rohrpostbüchse weist die Merkmale des Anspruchs 7 auf. Zum Entriegeln des Verriegelungsmittels sind dem Deckel Entriegelungsmittel zugeordnet. Die Entriegelungsmittel weisen wenigstens einen Griff auf, welcher zum Entriegeln in einer Richtung (Entriegelungsrichtung) bewegbar ist, die einer Öffnungsrichtung des Deckels entspricht. Dadurch ist eine Einhandbedienung möglich. Mit einer Bewegung erfolgt das Entriegeln durch Ziehen des Griffs. Durch Fortsetzung dieser Bewegung wird zugleich der Deckel angehoben bzw. ausgeschwenkt. Entriegelungsrichtung und Öffnungsrichtung stimmen möglichst weitgehend überein. Dabei hat der Griff die Funktion eines Hebels, dessen Wirkung auf das Verriegelungsmittel übertragen wird.

Nach einem weiteren Gedanken der Erfindung kann der Griff auf dem Deckel angeordnet sein und weist zumindest teilweise auch vor dem Entriegeln einen Abstand zum Deckel auf. Der Griff erstreckt sich in axialer Richtung des Körpers (der Rohrpostbüchse) vor dem Deckel im Übrigen und mit einem Abstand zu einer unter dem Griff liegenden Fläche. Dadurch ist ein Unterfassen des Griffs durch eine Bedienungsperson möglich.

Erfindungsgemäß kann der Griff über ein mechanisches Getriebe, insbesondere über Hebel, mit dem Verriegelungsmittel verbunden sein. Das mechanische Getriebe wirkt in diesem Fall zusammen mit dem Griff als Entriegelungsmittel.

Nach einem weiteren Gedanken der Erfindung können Griff und Verriegelungsmittel über eine Koppelstange getrieblich miteinander gekoppelt sein. Die Koppelstange ermöglicht eine konstruktiv einfache Verbindung von Griff und Verriegelungsmittel.

Erfindungsgemäß kann der Griff an einer Schwinge oder einem einseitig gelagerten Hebel angeordnet sein. Auch kann der Griff integraler Bestandteil der Schwinge oder des Hebels sein.

Erfindungsgemäß kann das Verriegelungsmittel einem insbesondere zweiseitigen Hebel oder einer Schwinge zugeordnet sein. Auch hier kann das Verriegelungsmittel integraler Bestandteil des Hebels oder der Schwinge sein.

Nach einem weiteren Gedanken der Erfindung ist vorgesehen, dass sich die Koppelstange bei Öffnungsbewegung des Griffs in Richtung auf das Verriegelungsmittel bewegt, dass sich dabei das Verriegelungsmittel gegen die Bewegung der Koppelstange bewegt und dass hierzu dem Verriegelungsmittel ein zweiseitiger Hebel mit zwei Hebelarmen zugeordnet ist, welcher an einem Hebelarm das Verriegelungsmittel aufweist und an seinem anderen Hebelarm mit der Koppelstange gelenkig verbunden ist.

Erfindungsgemäß kann die Koppelstange durch die Kraft einer Feder beaufschlagt sein, insbesondere in Richtung vom Verriegelungsmittel weg. Die Wirkrichtung der Feder, insbesondere wenigstens einer Zugfeder, zeigt in Richtung auf den Griff oder dessen Schwinge oder Hebel.

Erfindungsgemäß kann das Verriegelungsmittel am Deckel bewegbar gelagert sein, nämlich bewegbar zumindest zwischen einer Verriegelungsposition und einer Entriegelungsposition.

Nach einem weiteren Gedanken der Erfindung greift das Verrieglungsmittel in der Verriegelungsposition mit einer Rastkante hinter eine Haltekante der Rohrpostbüchse im Übrigen. Die Haltekante befindet sich in der Kappe, während die Rastkante dem Verriegelungsmittel am Deckel zugeordnet ist. Als Verriegelungsmittel ist vorzugsweise ein Zapfen oder ein Stift mit Rastkante vorgesehen. Durch das Zusammenwirken von Rastkante und Haltekante ist nur eine sehr kurze Bewegung des Verriegelungsmittels zum Entriegeln oder Verriegeln erforderlich.

Vorteilhafterweise ist das Verriegelungsmittel am Deckel und zugleich einer Schwenkachse des Deckels gegenüberliegend angeordnet. Die auf das Verriegelungsmittel wirkenden Kräfte, insbesondere im Bereich der Rastkante, sind dadurch am Geringsten.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:

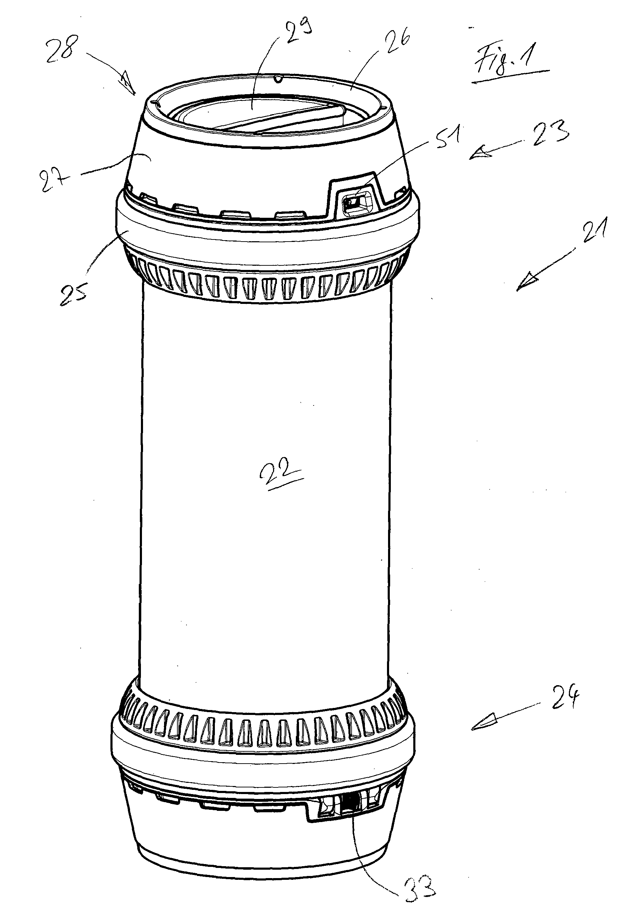

- Fig.1: eine Rohrpostbüchse mit geschlossenen Deckeln in perspektivischer Seitenansicht,

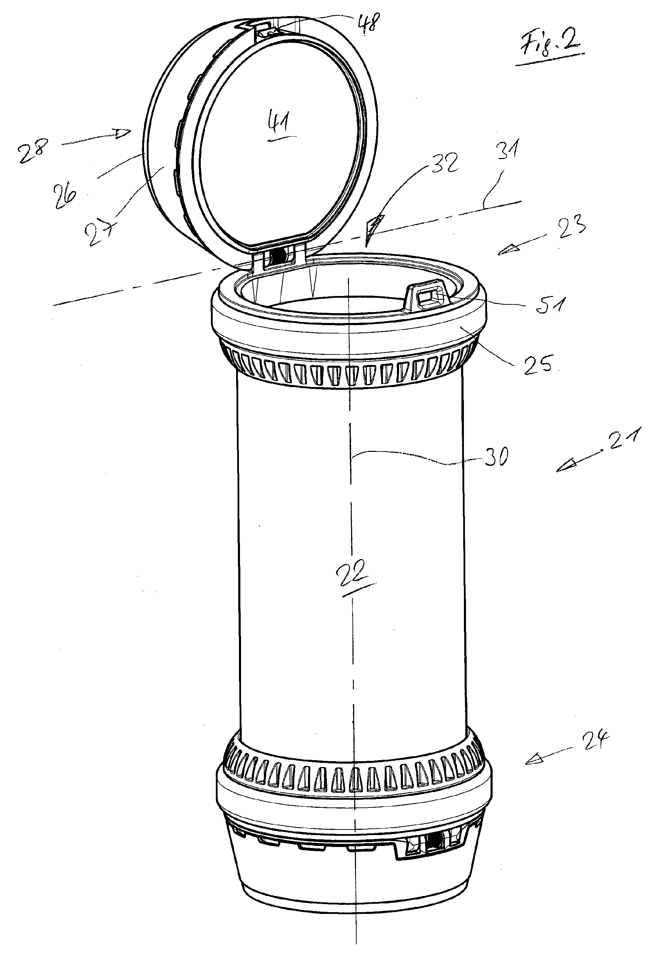

- Fig. 2: die Rohrpostbüchse gemäß Fig. 1 mit einem geöffneten Deckel,
- Fig. 3: die Rohrpostbüchse mit zwei geöffneten Deckeln,

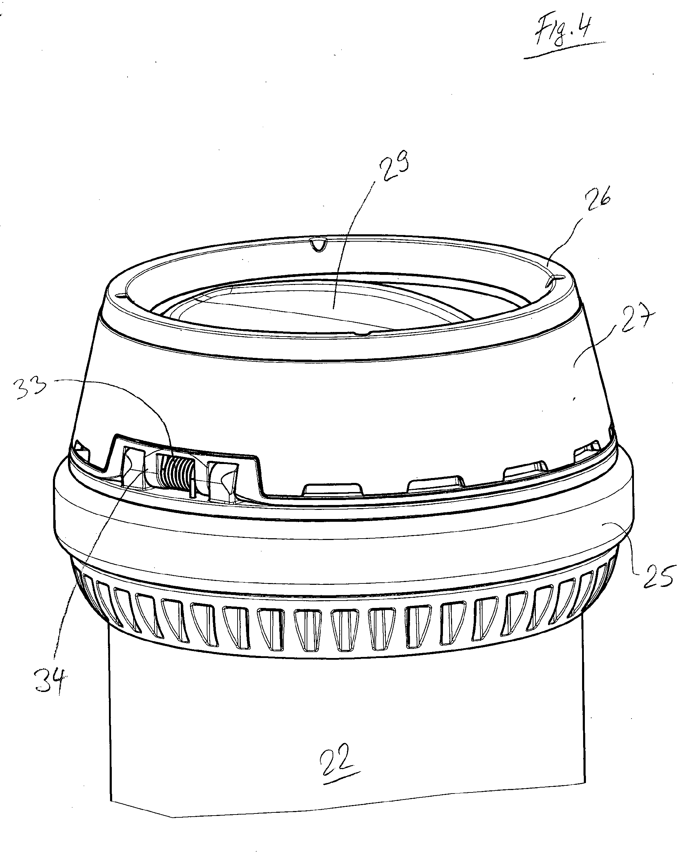

- Fig. 4: eine Kappe der Rohrpostbüchse in perspektivischer Darstellung,

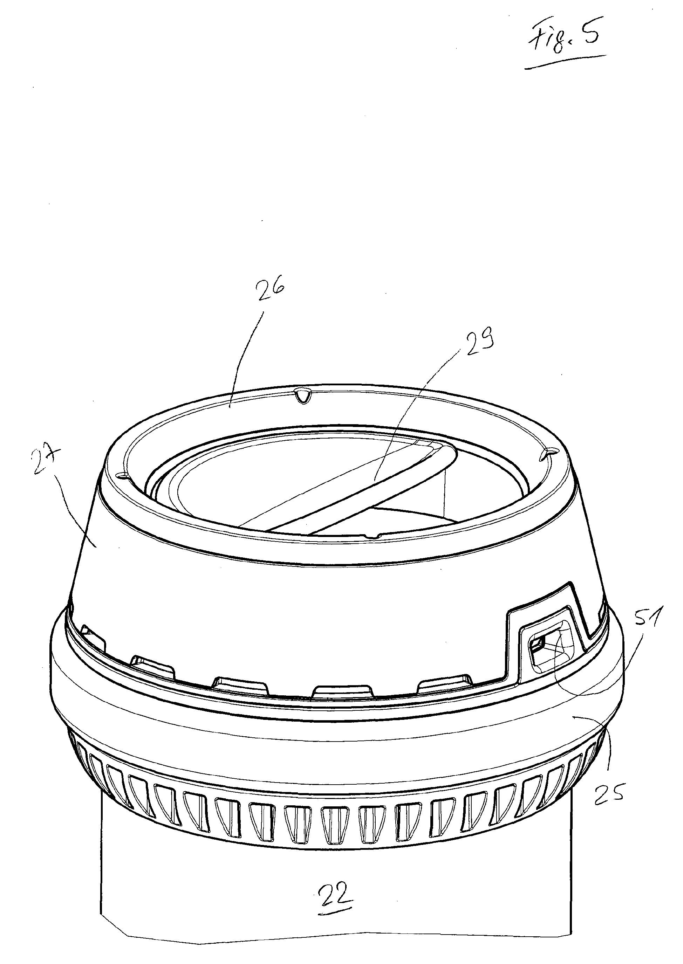

- Fig. 5: die Kappe gemäß Fig. 4 aus einem um etwa 90 Grad geänderten Blickwinkel,
- Fig. 6: die Kappe gemäß Fig. 5, jedoch mit vollständig geöffnetem Deckel,
- Fig. 7: eine Explosionsdarstellung der Kappe gemäß Fig. 4,
- Fig. 8: eine vergrößerte Explosionsdarstellung der Kappe gemäß Fig. 4,
- Fig. 9: eine Draufsicht auf das Innenleben des Deckels,

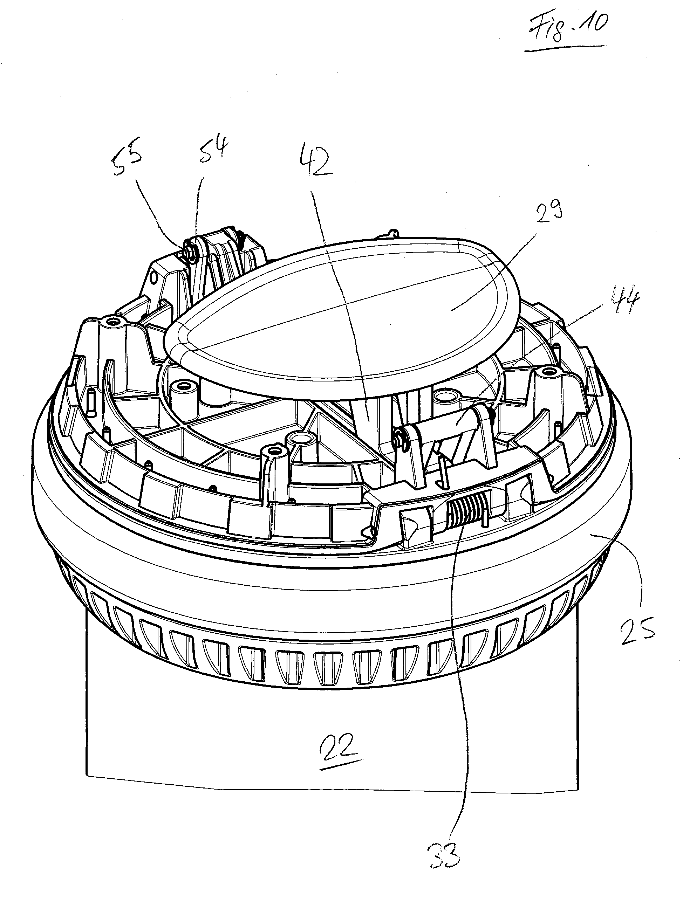

- Fig. 10: eine perspektivische Ansicht des Deckel-Innenlebens mit Griff,

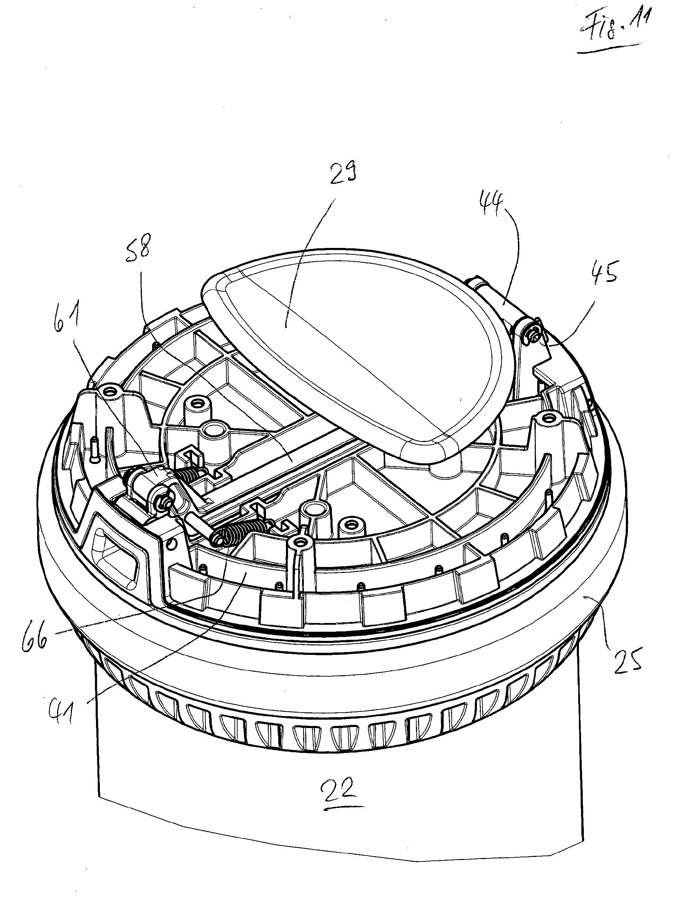

- Fig. 11: eine perspektivische Ansicht des Deckel-Innenlebens unter einem im Verhältnis zu Fig. 10 um etwa 90 Grad veränderten Blickwinkel,

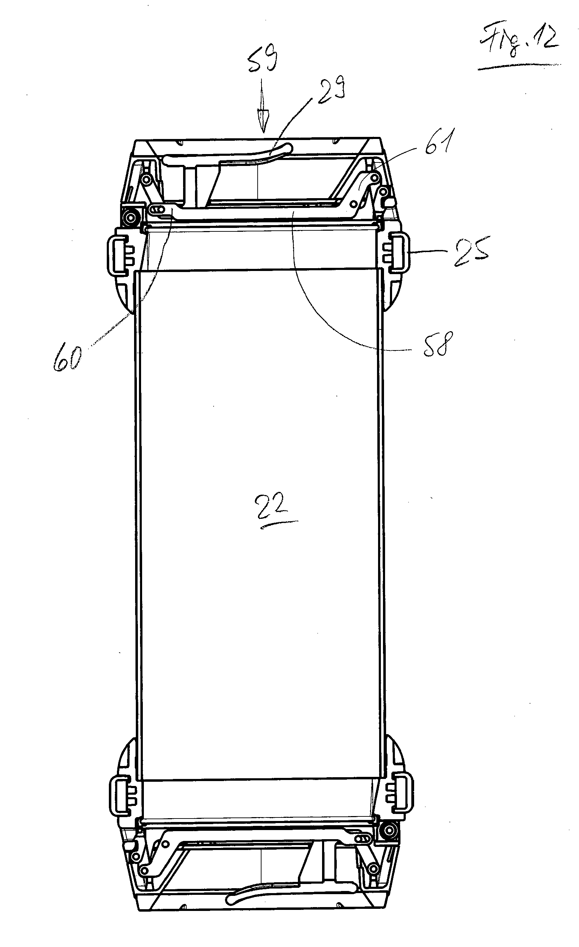

- Fig. 12: einen Längsschnitt durch die Rohrpostbüchse,
- Fig. 13: einen Längsschnitt durch die Kappe mit geschlossenem, verriegeltem Deckel, analog Fig. 12,
- Fig. 14: die Kappe wie in Fig. 13, jedoch mit angehobenem Griff und entriegeltem Deckel,
- Fig. 15: die Kappe wie in Fig. 13, jedoch mit leicht angehobenem Deckel,
- Fig. 16: die Kappe wie in Fig. 15, jedoch mit weiter angehobenem Deckel,
- Fig. 17: die Kappe wie in Fig. 16, jedoch mit vollständig geöffnetem Deckel,
- Fig. 18: Details der Kappe in einer vergrößerten Schnittdarstellung, mit wirksamer Verriegelung des Deckels.

Eine Rohrpostbüchse 21 weist im vorliegenden Fall einen Körper 22 nach Art eines Rohrstücks und zwei endseitige Kappen 23, 24 auf. Jede der beiden Kappen 23, 24 ist mit einem radial äußeren Ring 25, einem ringförmigen Gummipuffer 26, einer ringförmigen Abdeckung 27 und einem Deckel 28 mit Griff 29 versehen. Abdeckung 27 und Gummipuffer 26 sind Bestandteile des Deckels 28.

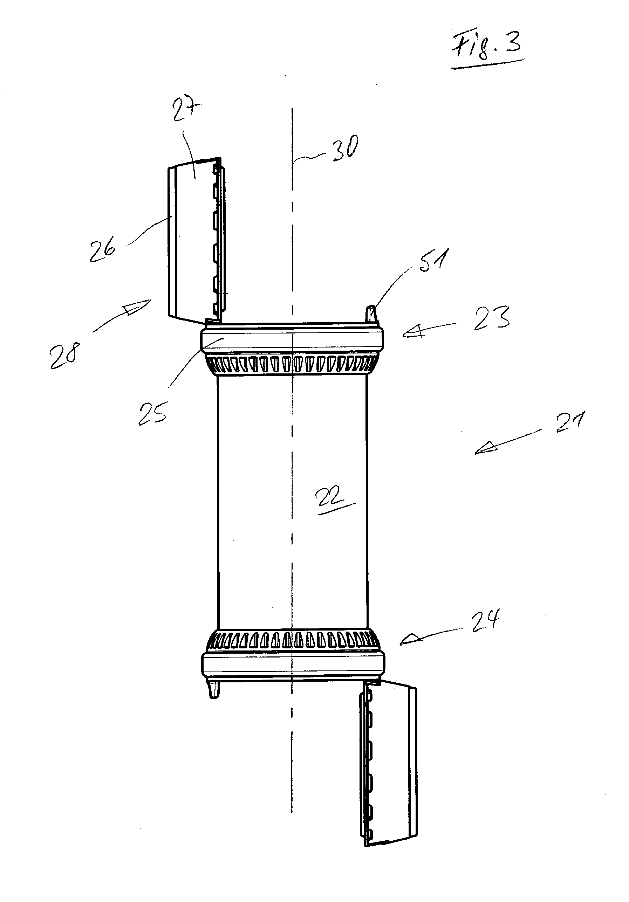

Der Deckel 28 verschließt die zugehörige Kappe 23, 24 entlang einer Ebene quer zu einer Längsachse 30 der Rohrpostbüchse 21, siehe insbesondere Fig. 3. In einer geöffneten Position ist der Deckel 28 um etwa 90 Grad aufgeschwenkt. Eine Schwenkachse 31 des Deckels 28 erstreckt sich parallel zur Ebene einer vom Deckel 28 zu verschließenden Öffnung 32, wobei diese Ebene senkrecht zur Längsachse 30 verläuft.

Im vorliegenden Fall sind beide Kappen 23, 24 mit je einem Deckel versehen, siehe Fig. 3. Dabei sind die Deckel einander gegenüberliegend angeordnet. Die Schwenkachse (ohne Ziffer) des in Fig. 3 unteren Deckels liegt der Schwenkachse 31 des in Fig. 3 oberen Deckels 28 diagonal gegenüber.

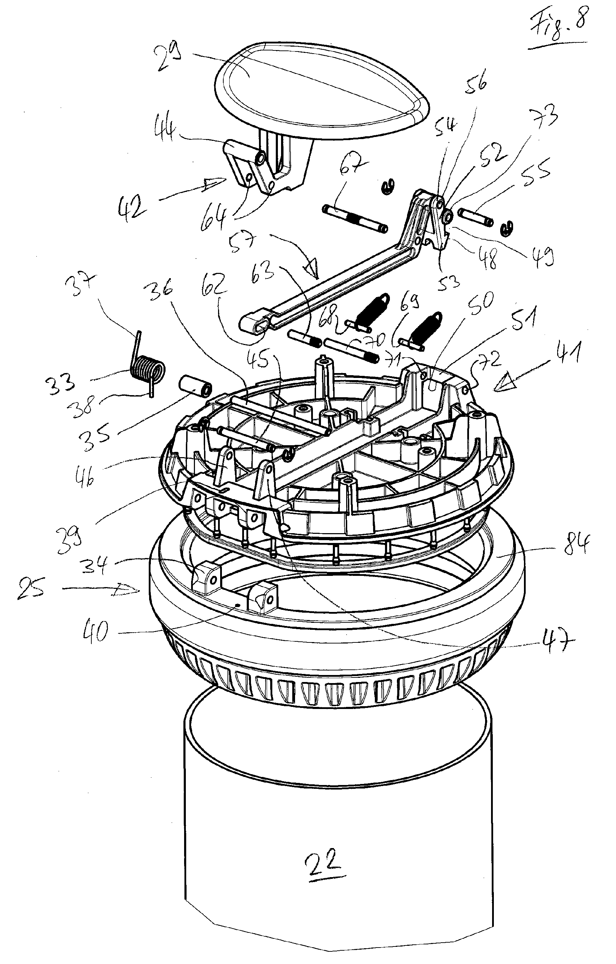

Der Deckel 28 wird in Öffnungsrichtung durch die Kraft einer Schraubenfeder 33 beaufschlagt. Die Schraubenfeder 33 ist in einem Deckelscharnier 34 angeordnet, nämlich koaxial zur Schwenkachse 31 und mit einer innenliegenden Buchse 35 auf einem Achsstift 36, siehe insbesondere Fig. 8. Die Schraubenfeder 33 weist an ihren Enden freie Schenkel 37, 38 auf. Der Schenkel 37 drückt gegen den Deckel 28 und steckt hierzu in einer Bohrung oder einem Langloch 39 des Deckels 28. Analog dazu ist der freie Schenkel 38 in einer Bohrung 40 des Rings 25 gehalten.

Der Deckel 28 wird durch die Schraubenfeder 33 vollständig offen gehalten, entsprechend Fig. 3, also mit einem Winkel von etwa 90 Grad zur Öffnung 32. Beim Schließen des Deckels 28 erhöht sich die wirksame Kraft der Schraubenfeder 33 etwas, entsprechend der Federkennlinie. Der Deckel 28 ist in seiner geschlossenen Position verriegelbar. Sobald der Deckel entriegelt ist, springt er durch die Kraft der Schraubenfeder 33 bis in die offene Position gemäß Fig. 3. Durch das selbsttätige Offenhalten des Deckels 28 ist ein komfortables Befüllen der Rohrpostbüchse 21 möglich. Auch kann eine automatisierte Befüllung durchgeführt werden.

Der Deckel 28 ist mehrteilig aufgebaut. Neben den bereits erwähnten Teilen Griff 29, Abdeckung 27 und Gummipuffer 26 weist der Deckel 28 zumindest noch einen Träger 41 mit einer Öffnungs- und Verriegelungsmechanik auf. Im Träger 41 ist das bereits genannte Langloch 39 angeordnet, ebenso Bestandteile des Deckelscharniers 34, welche auf korrespondierende Bestandteile des Deckelscharniers 34 am Ring 25 abgestimmt sind.

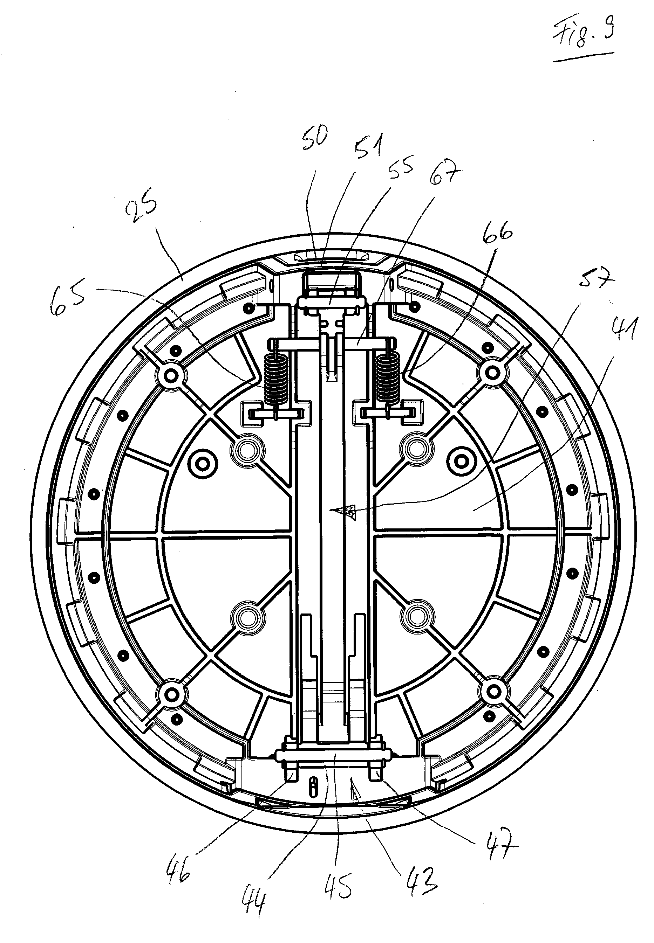

Die Gestalt des Trägers 41 ist in grober Vereinfachung scheibenförmig. Etwa mittig auf dem Träger 41 ist der Griff 29 angeordnet. Der Griff 29 ist im Wesentlichen scheibenförmig aber an einem Randbereich abgeflacht und insgesamt von geringerem Durchmesser als der Träger 41. Gehalten ist der Griff 29 an einem U-förmigen Doppelbügel 42. Letzterer ist nach Art einer Schwinge in einem Scharnier 43 gehalten. Tatsächlich ist der Doppelbügel 42 nur um wenige Grad schwenkbar. Hierzu weist der Doppelbügel 42 an seinen vom Griff 29 abgewandten Enden eine röhrenförmige Aufnahme 44 für einen Achsstift 45 auf, welcher in Bohrungen von zueinander parallelen Lagerschenkeln 46, 47 gehalten ist, siehe Fig. 9. Das Griffscharnier 43 ist in Axialrichtung (Richtung der Längsachse 30) unmittelbar vor dem Deckelscharnier 34 angeordnet, so dass Deckel 28 und Griff 29 im Wesentlichen die gleichen Bewegungsrichtungen aufweisen.

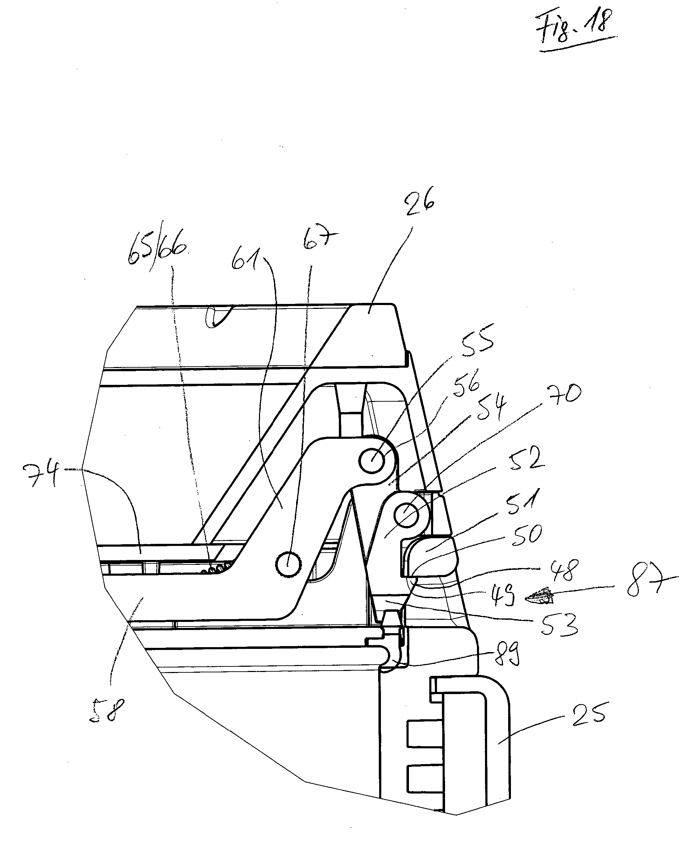

Radial gegenüber des Griffscharniers 43, also auf der anderen Seite des Deckels 28, ist ein Verriegelungsmittel vorgesehen, nämlich ein Verriegelungszapfen 48 mit einer Rastkante 49. Letztere wirkt mit einer Haltekante 50 eines Haltebügels 51 am Träger 41 zusammen, siehe Fig. 8 und 18. Die Rastkante 49 greift bei geschlossenem und verriegeltem Deckel 28 formschlüssig unter die Haltekante 50, so dass der Deckel 28 nicht selbsttätig aufspringen kann. Zum Entriegeln ist eine radial einwärts gerichtete Bewegung des Verriegelungszapfens 48 erforderlich, damit die Rastkante 49 die Haltekante 50 radial innen passieren kann. Die Bewegung des Verriegelungszapfens 48 wird ermöglicht durch die nachfolgend beschriebene Öffnungs- und Entriegelungsmechanik.

Der Verriegelungszapfen 48 ist Teil eines zweiarmigen Hebels 52. Letzterer weist einen unteren Hebelarm 53 und einen oberen Hebelarm 54 auf und ist etwa mittig auf einem Achsstift 55 schwenkbar gelagert und mit Klemmringen gesichert. Am oberen Hebelarm 54 ist ein Lager 56 zur Aufnahme des Achsstiftes 55 und zur Verbindung mit einer Koppelstange 57 vorgesehen. Letztere ist dem Hebel 52 gegenüberliegend mit dem Doppelbügel 42 gelenkig verbunden. Koppelstange 57 mit Doppelbügel 42 an der einen Seite und Hebel 52 an der anderen Seite bilden eine Art Doppelschwinge.

Die Koppelstange 57 verläuft mit einem langen Mittelteil 58 parallel zur Deckelebene und ist an ihren beiden Enden zur Deckeloberseite 59 hin gekröpft ausgebildet. Ein dem Scharnier 43 zugewandtes gekröpftes Ende 60 ist deutlich geringer gekröpft als ein dem Hebel 52 zugewandtes gekröpftes Ende 61.

Das gekröpfte Ende 60 weist ein Langloch 62 auf, in dem ein Verbindungsstift 63 parallel zur Deckelebene verschiebbar ist. Der Verbindungsstift 63 ist im Doppelbügel 42 unterhalb der Aufnahme 44 und mit Abstand zu dieser in Bohrungen 64 gehalten.

Die Öffnungs- und Verriegelungsmechanik ist durch Federmittel beaufschlagt, derart, dass der Deckel ohne Eingriff von außen stets verriegelt ist, insbesondere Rastkante 49 und Haltekante 50 miteinander verhakt sind. Im vorliegenden Fall ist die Koppelstange 57 durch zwei Zugfedern 65, 66 in Richtung auf das Deckelscharnier 34 beaufschlagt. Hierzu ist in die Koppelstange 57 im Bereich des Übergangs zwischen dem gekröpften Ende 61 und dem Mittelteil 58 ein Lagerstift 67 eingesetzt, an dessen beiden Enden je eine der Zugfedern 65, 66 angreift und die Koppelstange 57 in Richtung auf das Deckelscharnier 34 zieht. Hierzu ist jede der Zugfedern 65, 66 mit einem Haltestift 68 bzw. 69 am Träger 41 gehalten.

Schließlich ist der Hebel 52 am Haltebügel 51 schwenkbar gelagert, nämlich auf einem Lagerstift 70, welcher sich zwischen Bohrungen 71, 72 erstreckt. Auf dem Lagerstift 70 sitzt eine Lagerhülse 73. Letztere ist seitlich am Hebel 52 angeordnet, so dass sich die Aufteilung in die beiden genannten Hebelarme 53, 54 ergibt.

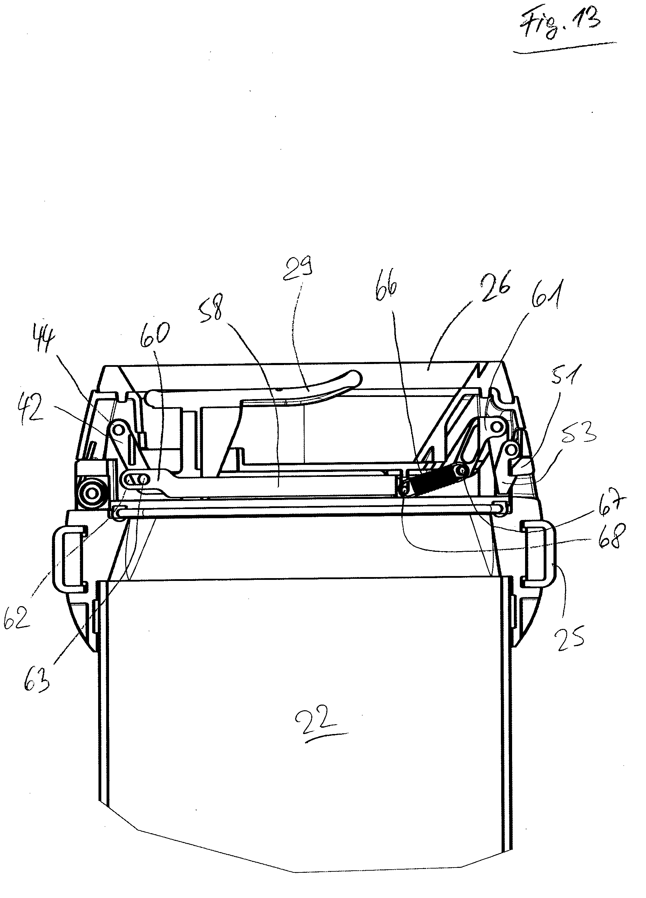

Die Funktion der Öffnungs- und Verriegelungsmechnik wird nachfolgend anhand der Fig. 13 bis 18 erläutert:
Fig. 13 zeigt den Deckel 28 in geschlossener Position und mit eingerasteter Verriegelung. Rastkante 49 und Haltekante 50 sind ineinander verhakt, siehe auch Fig. 18.

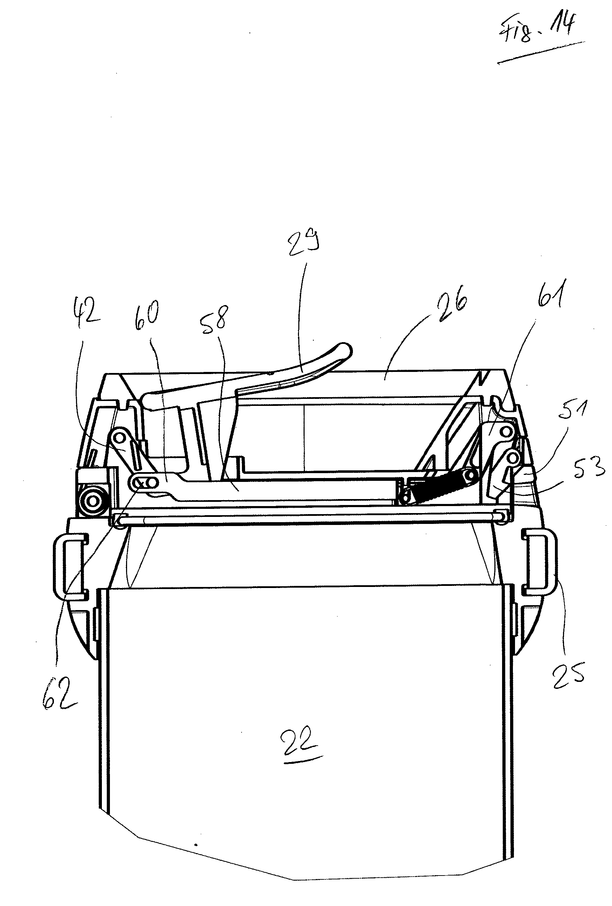

In Fig. 14 befindet sich der Deckel immer noch in einer geschlossenen Position. Der Griff 59 wurde aber leicht angehoben. Dadurch ist der Doppelbügel 42 gegen den Uhrzeigersinn um die Aufnahme 44 verschwenkt. In der Folge hat sich der Verbindungsstift 63 etwas nach rechts, in Richtung auf den Verriegelungszapfen 48 bewegt und dabei die Koppelstange 57 gegen den Zug der Federn 65, 66 mitgenommen. Die Koppelstange 57 hat dabei den Hebel 52 im Uhrzeigersinn um den Lagerstift 70 bewegt, so dass der Verriegelungszapfen 48 unter dem Haltebügel 51 radial einwärts bewegt wurde und Rastkante 49 und Haltekante 50 nicht mehr miteinander im Eingriff stehen.

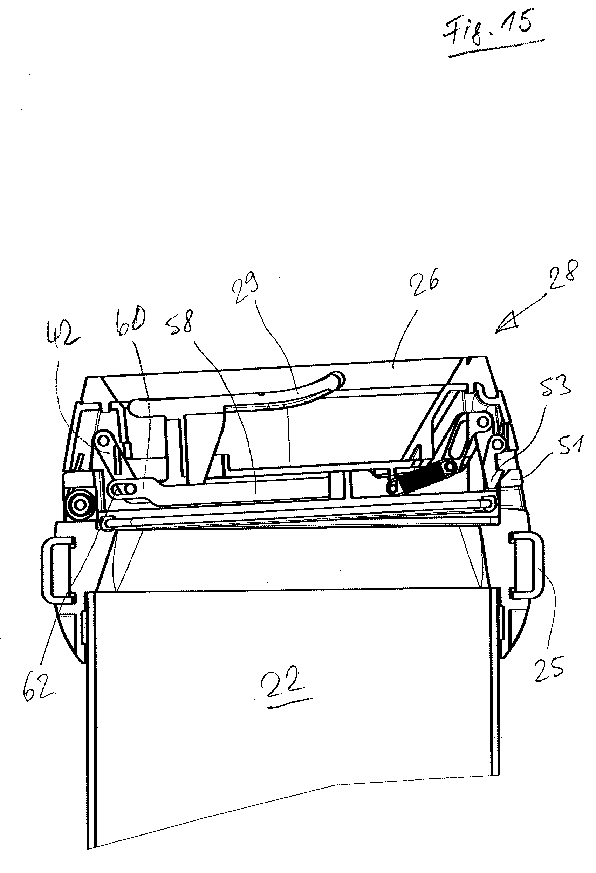

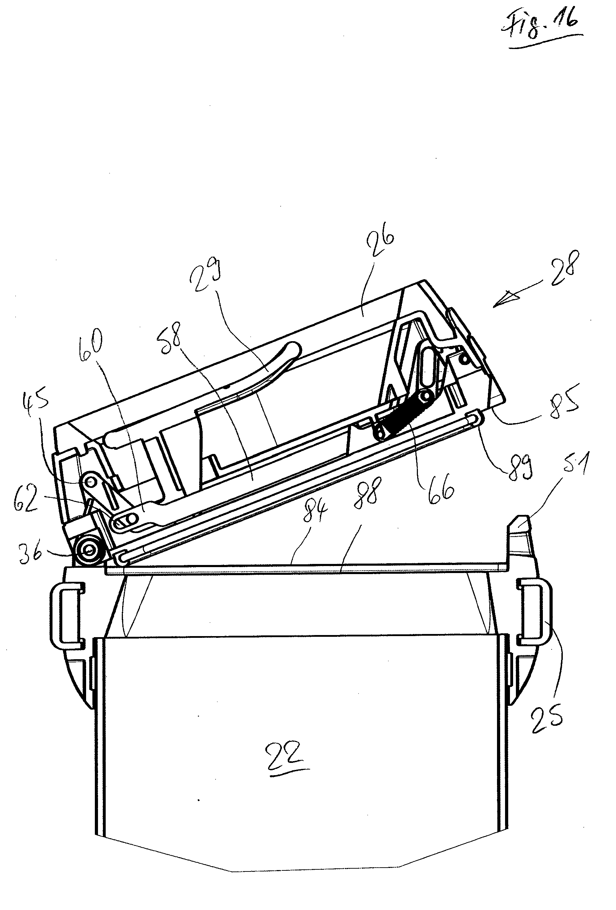

Durch weiteres Ziehen am Griff 59 ergibt sich die Position gemäß Fig. 15. Der Deckel 28 ist geringfügig (um einen kleinen Winkel) geöffnet. Der Verriegelungszapfen 48 hat den Haltebügel 51 passiert. Durch die Kraft der Zugfedern 65, 66 wird die Koppelstange 57 zurückbewegt in die Position gemäß Fig. 13. Entsprechend schwenkt der Hebel 52 zurück. Auch senkt sich der Griff 59 in den Deckel ab. Das weitere Ziehen am Griff 29 führt nicht zum Anheben desselben relativ zum Deckel, sondern zum Anheben des Deckels 28 selbst, siehe Fig. 16.

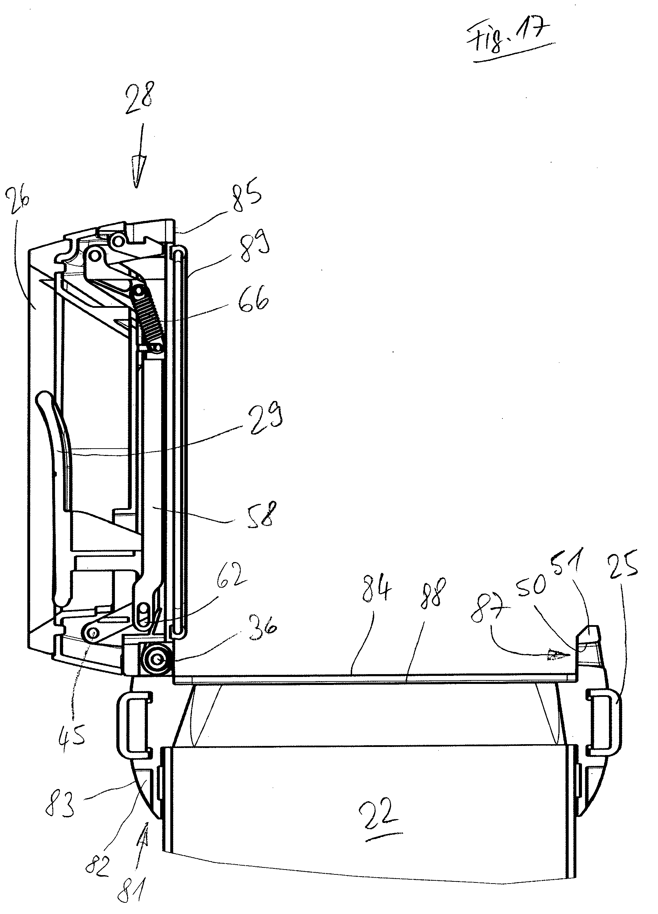

Die Bedienungsperson kann den Griff loslassen. Der Deckel öffnet bis in seine aufrechte Position gemäß Fig. 17 allein aufgrund der Wirkung der Schraubenfeder 33 am Deckelscharnier 34.

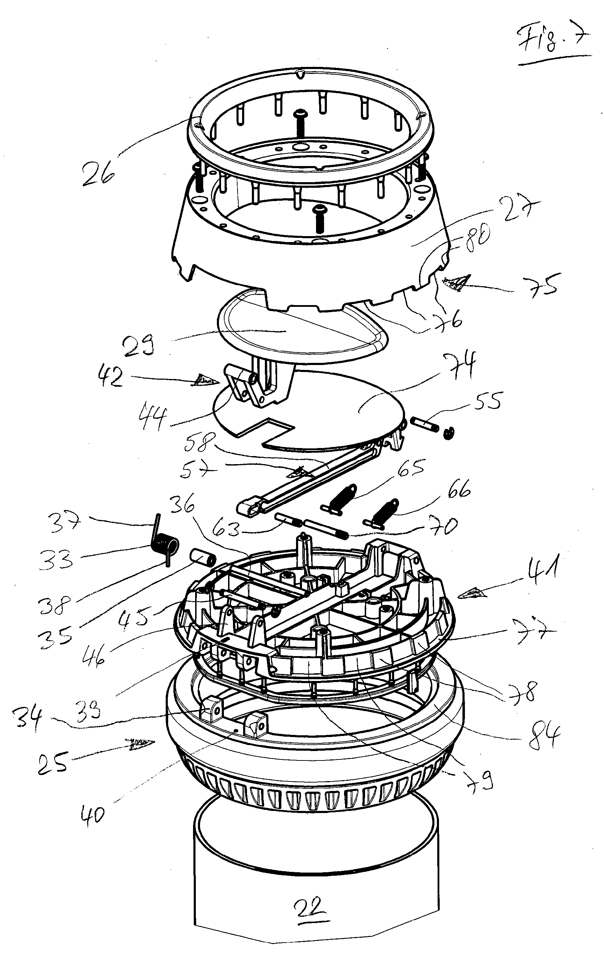

Der Griff 29 ist in den Deckel 28 hinein versenkt angeordnet und steht in geschlossener und verriegelter Position des Deckels nicht über den Gummipuffer 26 hervor. Nur beim Entriegeln des Verriegelungszapfens 48 schwenkt der Griff 29 kurzzeitig über die Ebene des Gummipuffers 26 hinaus, siehe Fig. 14. Der Gummipuffer ist mit Stiften in der Abdeckung 27 gesichert und zusätzlich in Richtung der Längsachse 30 verschraubt, siehe Fig. 7.

Die Abdeckung 27 bedeckt zusammen mit einer Platte 74 den Träger 41 und die Öffnungs- und Verriegelungsmechanik. Von Zeit zu Zeit oder regelmäßig ist eine Reinigung der Rohrpostbüchse erforderlich. Damit die verwendete Reinigungsflüssigkeit aus dem Deckel und seinen Bestandteilen gut ablaufen kann, weist die Abdeckung 27 an ihrem zum Körper 22 gerichteten unteren Rand 75 Ablauföffnungen bzw. Ablaufscharten 76 auf. Korrespondierend hierzu ist der Träger 41 an seinem oberen Rand 77 umlaufend abwechselnd mit Erhebungen 78 und Einbuchtungen 79 versehen. Im Träger befindliche Reinigungsflüssigkeit kann entlang der Einbuchtungen 79 und aus den Ablaufscharten 76 austreten.

Zwischen den Ablaufscharten 76 weist die Abdeckung 27 jeweils Vorsprünge 80 auf, die auf dem oberen Rand 77 des Trägers 41 aufliegen.

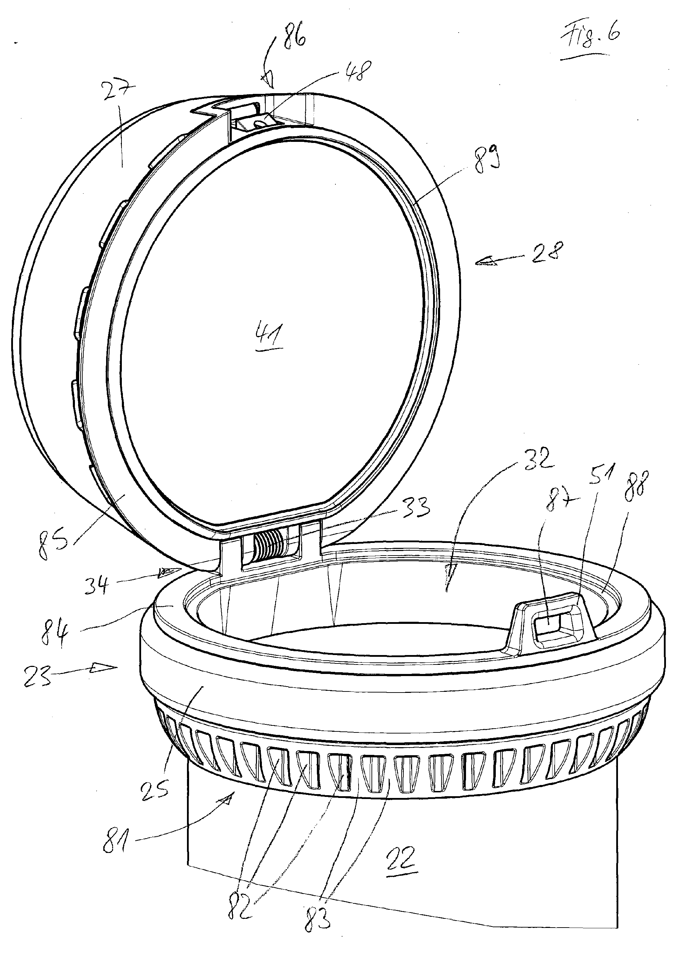

Die Kappe 23 - ebenso die Kappe 24 - weist an ihrem zum Körper 22 weisenden, äußeren Randbereich 81 einen Zahnkranz auf, welcher aus Vertiefungen 82 und Stegen 83 gebildet ist, die in Umfangsrichtung der Kappe 23 aufeinanderfolgen, siehe insbesondere Figur 6. Mit dem derart gebildeten Zahnkranz ist eine automatische Positionierung und Ausrichtung der Rohrpostbüchse 21 möglich.

Der Haltebügel 51 steht umgekehrt U-förmig auf einer oberen umlaufenden Randfläche 84 der Kappe 23. Auf der Randfläche 84 kommt eine korrespondierende umlaufende Randfläche 85 des Deckels 28 nach dem Schließen desselben zu liegen. Dabei taucht der Haltebügel 51 in die Randfläche 85 des Deckels 28 ein, welche hierzu eine Ausnehmung 86 aufweist, siehe insbesondere Figur 6.

Der Haltebügel 51 auf der umlaufenden Randfläche 84 bildet eine radial gerichtete Öffnung 87, die oberseitig die Haltekante 50 aufweist und in die bei verriegeltem Deckel der Verriegelungszapfen 48 ein Stück weit eintritt. Durch diese Anordnung ist ein automatisiertes Öffnen des Deckels von außen möglich. Ein nicht gezeigter Dorn kann in die Öffnung 87 von außen eingeführt werden und den Verriegelungszapfen 48 radial einwärts drücken. Durch die Schraubenfeder 33 ist der Deckel vorgespannt und springt auf, sobald die Rastkante 49 des Verriegelungszapfens 48 die Haltekante 50 passiert hat.

Die Beaufschlagung des Verriegelungszapfens 48 in radialer Richtung (einwärts) führt zu einer Schwenkbewegung des Hebels 52 und einer Verschiebung der Koppelstange 57. Bedingt durch das Langloch 62 am gekröpften Ende 60 erfolgt die Bewegung der Koppelstange 57 ohne Mitnahme des Griffs 29. Die für die Bewegung des Verriegelungszapfens 48 zu überwindenden Massenträgheiten sind dadurch reduziert.

Radial einwärts weist die umlaufende Randfläche 84 einen versenkten Absatz 88 auf, dessen Oberfläche als Dichtfläche mit einer deckelseitigen, vollständig umlaufenden Dichtung 89 zusammenwirkt. Entsprechend ist die Dichtung 89 bei geschlossenem Deckel verdeckt und geschützt durch die umlaufende Randfläche 84, auf der die Randfläche 85 aufliegt (oder nahezu aufliegt). Die Dichtung 89 ist relativ zur Randfläche 85 erhaben und auf dieser radial innen angeordnet, siehe insbesondere Figur 6. Aufgrund der Dichtung 89 schließt der Deckel wasserdicht.

Verriegelungszapfen 48 und Haltebügel 51 liegen außerhalb von Dichtung 89 und Absatz 88. Die Abdichtung des Deckels zur Kappe im Übrigen ist durch den Verriegelungsmechanismus in keiner Weise unterbrochen. Sämtliche Bestandteile des Verriegelungsmechanismus sind außerhalb der abdichtenden Elemente Dichtung 89 und Absatz 88 angeordnet.

**Bezugszeichenliste:**

| | | | |
|---|---|---|---|
| 21 | Rohrpostbüchse | 47 | Lagerschenkel |
| 22 | Körper | 48 | Verriegelungszapfen |
| 23 | Kappe | 49 | Rastkante |
| 24 | Kappe | 50 | Haltekante |
| 25 | Ring | 51 | Haltebügel |
| 26 | Gummipuffer | 52 | Hebel |
| 27 | Abdeckung | 53 | Unterer Hebelarm |
| 28 | Deckel | 54 | Oberer Hebelarm |
| 29 | Griff | 55 | Achsstift |
| 30 | Längsachse | 56 | Lager |
| 31 | Schwenkachse | 57 | Koppelstange |
| 32 | Öffnung | 58 | Mittelteil |
| 33 | Schraubenfeder | 59 | Deckeloberseite |
| 34 | Deckelscharnier | 60 | Gekröpftes Ende |
| 35 | Buchse | 61 | Gekröpftes Ende |
| 36 | Achsstift | 62 | Langloch |
| 37 | Freier Schenkel | 63 | Verbindungsstift |
| 38 | Freier Schenkel | 64 | Bohrungen |
| 39 | Langloch | 65 | Zugfeder |
| 40 | Bohrung | 66 | Zugfeder |
| 41 | Träger | 67 | Lagerstift |
| 42 | Doppelbügel (U-förmig) | 68 | Haltestift |
| 43 | Scharnier (Griffscharnier) | 69 | Haltestift |
| 44 | Aufnahme | 70 | Lagerstift |
| 45 | Achsstift | 71 | Bohrungen |
| 46 | Lagerschenkel | 72 | Bohrungen |
| 73 | Lagerhülse | | |
| 74 | Platte | | |
| 75 | Unterer Rand | | |
| 76 | Ablaufscharten | | |
| 77 | Rand (des Trägers) | | |
| 78 | Erhebungen | | |
| 79 | Einbuchtungen | | |
| 80 | Vorsprünge | | |
| 81 | Randbereich | | |
| 82 | Vertiefungen | | |
| 83 | Stege | | |
| 84 | Randfläche | | |
| 85 | Randfläche | | |
| 86 | Ausnehmung | | |
| 87 | Öffnung | | |
| 88 | Absatz | | |
| 89 | Dichtung | | |

## Patentansprüche

1. Rohrpostbüchse (21) mit einem Deckel (28) an mindestens einem Ende, wobei der Deckel (28) zwischen einer offenen Position und einer geschlossenen Position bewegbar ist, und wobei dem Deckel (28) ein Verriegelungsmittel zugeordnet ist, welches ein Bewegen des Deckels (28) aus der geschlossenen Position heraus verhindert, **dadurch gekennzeichnet, dass** dem Deckel (28) ein Federmittel zugeordnet ist, welches in Richtung der offenen Position des Deckels (28) wirkt.

2. Rohrpostbüchse nach Anspruch 1, **dadurch gekennzeichnet, dass** das Federmittel den Deckel (28) aus seiner geschlossenen Position bis in die offene Position bewegt, sobald das Verriegelungsmittel gelöst ist.

3. Rohrpostbüchse nach Anspruch 1 oder 2, **dadurch gekennzeichnet, dass** der Deckel (28) in seiner geschlossenen Position in einer Ebene senkrecht zu einer Längsachse (30) der Rohrpostbüchse (21) liegt, und dass der Deckel (28) in seiner offenen Position insbesondere in einer Ebene parallel zur Längsachse (30) liegt.

4. Rohrpostbüchse nach Anspruch 1 oder einem der weiteren Ansprüche, **dadurch gekennzeichnet, dass** der Deckel (28) um eine Schwenkachse (31) schwenkbar ist, welche außerhalb der Längsachse (30) und senkrecht zu dieser verläuft.

5. Rohrpostbüchse nach Anspruch 1 oder einem der weiteren Ansprüche, **dadurch gekennzeichnet, dass** das Federmittel wenigstens eine Schraubenfeder (33) ist, welche insbesondere achsparallel oder sogar koaxial zu einer Schwenkachse (31) des Deckels (28) angeordnet ist.

6. Rohrpostbüchse nach Anspruch 1 oder einem der weiteren Ansprüche, **dadurch gekennzeichnet, dass** das Federmittel wenigstens eine Schraubenfeder (33) ist, welche an jedem Ende einen tangential gerichteten freien Schenkel (37, 38) aufweist, wobei der eine Schenkel (37) gegen den Deckel (28) und der andere Schenkel (38) gegen die Rohrpostbüchse im Übrigen drückt.

7. Rohrpostbüchse (21) mit einem Deckel (28) an mindestens einem Ende, wobei der Deckel (28) zwischen einer offenen Position und einer geschlossenen Position bewegbar ist, wobei dem Deckel (28) ein Verriegelungsmittel zugeordnet ist, welches ein Bewegen des Deckels (28) aus der geschlossenen Position heraus verhindert, und wobei dem Deckel (28) Entriegelungsmittel zum Entriegeln des Verriegelungsmittels zugeordnet sind, **dadurch gekennzeichnet, dass** die Entriegelungsmittel wenigstens einen Griff (29) aufweisen, welcher zum Entriegeln in einer Richtung (Entriegelungsrichtung) bewegbar ist, die einer Öffnungsrichtung des Deckels (28) entspricht.

8. Rohrpostbüchse nach Anspruch 7, **dadurch gekennzeichnet, dass** der Griff (29) auf dem Deckel (28) angeordnet ist und zumindest teilweise auch vor dem Entriegeln einen Abstand zu einer benachbarten Fläche des Deckels (28) aufweist.

9. Rohrpostbüchse nach Anspruch 7 oder 8, **dadurch gekennzeichnet, dass** der Griff (29) über ein mechanisches Getriebe, insbesondere über Hebel, mit dem Verriegelungsmittel verbunden ist.

10. Rohrpostbüchse nach Anspruch 7 oder einem der weiteren Ansprüche, **dadurch gekennzeichnet, dass** der Griff (29) und das Verriegelungsmittel über eine Koppelstange (57) getrieblich miteinander gekoppelt sind.

11. Rohrpostbüchse nach Anspruch 10, **dadurch gekennzeichnet, dass** der Griff (29) an einer Schwinge oder einem einseitig gelagerten Hebel angeordnet ist.

12. Rohrpostbüchse nach Anspruch 10 oder 11, **dadurch gekennzeichnet, dass** das Verriegelungsmittel einem insbesondere zweiseitigen Hebel (52) oder einer Schwinge zugeordnet ist.

13. Rohrpostbüchse nach Anspruch 10 oder einem der weiteren Ansprüche, **dadurch gekennzeichnet, dass** sich die Koppelstange (57) bei Öffnungsbewegung des Griffs (29) in Richtung auf das Verriegelungsmittel bewegt, dass sich dabei das Verriegelungsmittel gegen die Bewegung der Koppelstange (57) bewegt und dass hierzu dem Verriegelungsmittel ein zweiseitiger Hebel (52) mit zwei Hebelarmen (53, 54) zugeordnet ist, welche an einem Hebelarm (53) das Verriegelungsmittel aufweist und am anderen Hebelarm (54) mit der Koppelstange (57) gelenkig verbunden ist.

14. Rohrpostbüchse nach Anspruch 10 oder einem der weiteren Ansprüche, **dadurch gekennzeichnet, dass** die Koppelstange (57) durch die Kraft einer Feder (65, 66) beaufschlagt ist, insbesondere in Richtung vom Verriegelungsmittel weg.

15. Rohrpostbüchse nach Anspruch 7 oder einem der weiteren Ansprüche, **dadurch gekennzeichnet, dass** das Verriegelungsmittel am Deckel (28) bewegbar gelagert ist, nämlich bewegbar zumindest zwischen einer Verriegelungsposition und einer Entriegelungsposition.

16. Rohrpostbüchse nach Anspruch 15, **dadurch gekennzeichnet, dass** das Verriegelungsmittel in der Verriegelungsposition mit einer Rastkante (49) hinter eine Haltekante (50) der Rohrpostbüchse im Übrigen greift.

17. Rohrpostbüchse nach Anspruch 7 oder einem der weiteren Ansprüche, **dadurch gekennzeichnet, dass** das Verriegelungsmittel am Deckel (28) und einer Schwenkachse (31) des Deckels (28) gegenüberliegend angeordnet ist.
